(19) Europäisches Patentamt
European Patent Office
Office européen des brevets

(11) EP 1 072 567 B1

(12) **FASCICULE DE BREVET EUROPEEN**

(45) Date de publication et mention de la délivrance du brevet:
**16.10.2002 Bulletin 2002/42**

(51) Int Cl.[7]: **C04B 28/06**
// (C04B28/06, 14:04, 18:04)

(21) Numéro de dépôt: **00402048.3**

(22) Date de dépôt: **19.07.2000**

(54) **Procédé d'inertage de dèchets par enrobage dans un liant hydraulique et prémix pour la mise en oeuvre de ce procédé**

Verfahren zum Inertisieren von Abfällen durch Einkapseln in einen hydraulischen Binder und Vormischung zur Durchführung des Verfahrens

Method for rendering inert waste materials by encapsulation in an hydraulic binder and premix for carrying out this method

(84) Etats contractants désignés:
**BE ES FR GR IT**

(30) Priorité: **30.07.1999 FR 9909922**

(43) Date de publication de la demande:
**31.01.2001 Bulletin 2001/05**

(73) Titulaire: **CIMENTS FRANCAIS**
**F-92800 Puteaux (FR)**

(72) Inventeurs:
- **Classen, Bruno**
  **F-78124 Mareil sur Mauldre (FR)**
- **Le Rolland, Bruno**
  **F-78250 Oinville sur Montcient (FR)**
- **Les auters inventeurs ont renoncé à leur désignation**

(74) Mandataire: **Loyer, Bertrand**
**Cabinet Loyer,**
**78, avenue Raymond Poincaré**
**75116 Paris (FR)**

(56) Documents cités:
**EP-A- 0 838 443** **EP-A- 0 900 771**
**WO-A-98/49115** **US-A- 5 494 513**

- **CHEMICAL ABSTRACTS, vol. 104, no. 8, 24 février 1986 (1986-02-24) Columbus, Ohio, US; abstract no. 55336k, CHICHIBU CEMENT: page 291; XP000184287 & JP 60 127252 A (ID.) 6 juillet 1985 (1985-07-06)**
- **CHEMICAL ABSTRACTS, vol. 93, no. 24, 15 décembre 1980 (1980-12-15) Columbus, Ohio, US; abstract no. 224787v, MATSUSHITA ELECTRIC WORKS: page 263; XP000184036 & JP 08 080758 A (ID.) 26 mars 1996 (1996-03-26)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Jouve, 75001 PARIS (FR)

## Description

La présente invention a pour objet un procédé pour stabiliser et solidifier les déchets ultimes tels que par exemple les mâchefers, les résidus issus de l'incinération des ordures ménagères et des déchets industriels. L'invention concerne aussi le premix utilisé pour la mise en oeuvre de ce procédé.

A partir de 2002, la législation prévoit l'interdiction de la mise en décharge des déchets ultimes. Ceux-ci devront être placés dans des sites de stockage après leur avoir fait subir un procédé de stabilisation. Ce procédé consiste à conférer au produit obtenu certaines caractéristiques portant sur sa fraction lixiviable et sa tenue mécanique. La fraction lixiviable est mesurée au moyen de tests de lixiviation normalisés (X31-210 et X31-211). Ils permettent de mesurer les quantités de polluants relargués ainsi que la fraction soluble. Ce changement dans la législation s'inscrit dans une volonté de protection de l'environnement. En effet, ces déchets ultimes contiennent de nombreux polluants organiques et minéraux. En l'absence de traitement de stabilisation, les phénomènes tels que l'érosion par les eaux de ruissellement ou les eaux de pluies, ainsi que l'action du vent, risquent d'engendrer une pollution du sol et des nappes phréatiques.

Il existe déjà de nombreux procédés de stabilisation des déchets. Ceux-ci se répartissent en trois grandes familles :

- les procédés de vitrification : ce sont des procédés thermiques qui consistent à faire fondre totalement les déchets et d'éventuels ajouts pour ensuite les refroidir brutalement afin d'obtenir un solide ayant un aspect vitreux. Cette technique permet d'obtenir un matériau d'une excellente tenue chimique, mais le traitement thermique direct du déchet s'accompagne d'émission de chlore, d'oxyde de soufre ou de métaux lourds volatils comme le mercure, le cadmium et le plomb, nuisibles à l'environnement.

- les procédés d'enrobage par un liant organique (par exemple le bitume). Ceux-ci consistent à mélanger à chaud le liant et le déchet, à mouler le mélange obtenu suivant la forme souhaitée et à le laisser refroidir. Le produit obtenu est hétérogène lorsque le déchet est incorporé sous forme de granulat et relativement homogène lorsque le déchet est pulvérulent. Dans les deux cas, il ne se produit aucune réaction chimique entre le déchet et le liant. Par conséquent, lorsque le produit fond (par exemple sous l'effet du soleil), les éléments toxiques sont libérés et peuvent donc engendrer une pollution. De plus, la réglementation relative à l'admission des déchets inertés dans les sites de stockage est de plus en plus sévère sur leur teneur en matière organique, ce qui limite fortement l'utilisation de ce genre de procédé.

- les procédés de solidification / stabilisation par un liant hydraulique. Ceux-ci consistent à mélange le déchet avec le (ou les) liant(s) adéquat(s), éventuellement des additifs (fluidifiant, filler...) et de l'eau. Le coulis obtenu est ensuite mis en place sur le lieu de stockage ou moulé sous forme de blocs. Les liants utilisés sont généralement des ciments avec certains ajouts qui au contact de l'eau réagissent entre eux ou avec les constituants des déchets pour former des phases très peu solubles. Ces procédés ont plusieurs avantages. D'une part, ils confèrent au produit solidifié une bonne tenue mécanique et une faible porosité, ce qui limite sa surface de contact avec les eaux de ruissellement. D'autre part, les phases peu solubles se formant au cours de l'hydratation telles que les silicates de calcium hydratés et les aluminates de calcium hydratés fixent un grand nombre de polluants, ce qui limite les relargages d'éléments nocifs.

Ces derniers se distinguent par la composition des liants hydrauliques utilisés. Ceux-ci peuvent être classés en trois catégories :

a) les procédés utilisant des liants hydrauliques dont la composition ne comprend pas de ciment. A titre d'exemple, US 5494513 utilise jusqu'à 5 constituants (une zéolite, de la chaux, de l'hemihydrate, du sulfate de sodium et du sulfate d'aluminium) ; US 5484533 utilise 6 constituants : une zéolite, du quartz, de l'hydroxyde d'aluminium, du carbonate de sodium ou de l'hydroxyde de sodium, de la chaux dolomitique et enfin de l'hydroxyde ou du carbonate de potassium. Le nombre élevé de ces composants complique donc considérablement la constitution du liant d'inertage. De plus, le dernier cité comprend une étape de cure entre 80 et 120° C à la fois coûteuse et dangereuse, puisqu'elle libère les hydrocarbures légers pouvant être présents dans le déchet.

b) les procédés utilisant des liants hydrauliques comportant une partie de ciment et un ou plusieurs ajouts permettant d'une part d'utiliser moins de ciment et d'autre part de favoriser la fixation des polluants. Ainsi, J 10225669 utilise une composition comprenant du ciment et des cendres volantes ; EP 547923 emploie un liant comportant du ciment et du laitier ; FR 2758749 utilise un ciment quelconque auquel on ajoute un composé contenant des ions nitrates ou nitrites de manière à diminuer les gonflements. Ce dernier est dangereux, car dans le cas d'une mauvaise fixation des nitrates au cours de l'hydratation, les ions nitrates seraient immédiatement relargués par le produit solidifié, les phases nitrées étant généralement fortement solubles dans l'eau.

c) les procédés utilisant des liants hydrauliques ne comportant que du ciment. Ceux-ci sont très efficaces mais nécessitent une analyse préliminaire du déchet à stabiliser de manière à optimiser la composition et la quantité de ciment à utiliser. Ainsi, EP 588689 préconisé une analyse élémentaire du déchet afin d'au moins connaître la composition en calcium et sels solubles. La composition du ciment d'inertage (en l'occurrence un ciment alumineux) dépend alors de cette analyse préliminaire. Par conséquent, une variation de la composition du déchet engendre un changement dans la composition du ciment à utiliser. Ce procédé s'avère donc compliqué lorsque la composition des déchets varie, ce qui, de par leur provenance, est souvent le cas.

Un but de la présente invention est donc de proposer un procédé simple, n'engendrant pas de coût d'application excessif.
Un autre but est de proposer un procédé qui puisse s'adapter à de très nombreux types de déchets.
En outre le déchet stabilisé doit aussi vérifier, en France, les critères d'acceptation dans un site de stockage définis par le Journal Officiel de la République Française (arrêté du 18 février 1994), dont les critères mécaniques sont peu contraignants (des résistances mécaniques aussi faibles que 1 MPa étant considérées comme suffisantes), mais dont les critères de fraction soluble (10 %) sont plus difficiles à respecter par les procédés actuels, à un niveau acceptable économiquement.
Un autre but de la présente invention est donc de proposer un procédé qui, en "neutralisant" les déchets, permette d'obtenir un produit solide ayant une fraction soluble faible, c'est-à-dire inférieure à 10 % (conformément à l'arrêté ci-dessus).
Ces buts sont atteints par un procédé d'inertage de déchets selon l'invention qui entre dans la catégorie des procédés d'enrobage des dits déchets dans un liant hydraulique à base de ciment, le procédé étant caractérisé par le fait que le liant hydraulique d'inertage comprend du ciment sulfoalumineux composé d'au moins 30 % en poids de la phase $3CaO.3Al_2O_3.CaSO_4$ ($C_4A_3S$).
Il s'est en effet avéré, de façon surprenante, que l'utilisation de ciments contenant une forte proportion (≥ 30 %) de la phase sulfoaluminate de calcium (CSA), pour l'inertage de déchets, permet d'obtenir une fraction soluble inférieure à celle obtenue avec d'autres ciments, tels que par exemple le ciment alumineux ou le ciment Portland. Une explication peut résider dans le fait que lors de l'hydratation la phase CSA, qui réagit avec l'eau pour former des phases hydratées telles que l'ettringite et le monosulfoaluminate de calcium, réagisse aussi avec les cations métalliques et les anions solubles présents dans les déchets en les enfermant dans leur matrice cristalline. Ce mode de fixation chimique et la faible solubilité de ces hydrates résulte en une excellente rétention des polluants solubles.
Selon une première variante de l'invention, le liant hydraulique est constitué essentiellement dudit ciment sulfoalumineux, le liant pouvant avantageusement être utilisé dans des proportions comprises entre 15 et 150 parties en poids, de préférence entre environ 25 et 100 parties en poids pour 100 parties de déchets, par exemple de résidus d'incinération des ordures ménagères.
Selon une seconde variante de l'invention, le liant hydraulique comprend dudit ciment sulfoalumineux et un filler à base, ou constitué d'une ou de plusieurs zéolites.
Cette zéolite peut être d'origine naturelle ou synthétique et peut comprendre des proportions variables en silice et alumine, constituants principaux des zéolites. De manière avantageuse, la zéolite est sous une forme pulvérulente, de granulométrie voisine de celle du ciment, c'est-à-dire de préférence inférieure à 100 μm environ.
La zéolite permet de limiter également les relargages de cations métalliques lorsque le produit durci est soumis à l'érosion de l'eau.
La proportion de zéolite par rapport au déchet, est avantageusement inférieure à 120 parties en poids, de préférence 100 parties, pour 100 parties de déchet et le liant hydraulique contient de préférence au moins 13 parties environ dudit ciment sulfoalumineux pour 100 parties de déchet.
La présente invention a également pour objet le prémix pour la mise en oeuvre du procédé décrit ci-dessus, le prémix étant caractérisé en ce qu'il contient au moins 15 % de ciment sulfoalumineux composé d'au moins 30 % de la phase $3CaO.3Al_2O_3.CaSO_4$ ($C_4A_3S$).
Ce prémix contient avantageusement, suivant la seconde variante de l'invention, également une ou plusieurs zéolites.
La présente invention concerne également l'utilisation dudit procédé d'inertage pour l'enrobage des déchets de différentes catégories, telles que des déchets industriels spéciaux ultimes : résidus d'incinération, résidus de métallurgie, etc... Il convient particulièrement pour la stabilisation et la solidification de résidus d'incinération d'ordures ménagères, en permettant de limiter leur fraction soluble après lixiviation à des teneurs inférieures à 10 %, ou même inférieures à 6 % dans certains cas, sans augmenter les coûts d'inertage.
La présente invention va être maintenant illustrée par des exemples de mise en oeuvre, non limitatifs.

Dans ces exemples ont été utilisés des déchets parmi les plus "nocifs", c'est-à-dire des déchets se présentant sous forme de poudres et dont une partie peut se dissoudre dans l'eau, et en particulier les refiom (résidus d'épuration des fumées issues de l'incinération des ordures ménagères), dont la fraction soluble est très élevée.

Dans les exemples suivants, le déchet à stabiliser est un refiom dont la fraction soluble est égale à 48 %.

Exemple 1 : cet exemple concerne le procédé d'inertage avec un liant hydraulique constitué uniquement de ciment (ciment sulfoalumineux) selon la première variante de l'invention, et autres cimants à titre de comparaison.

Des éprouvettes contenant 100 parties de refiom, 40 parties de ciment et 57,5 parties d'eau ont été gâchées. Les différents ciments utilisés ont été le Portland, un ciment alumineux, une composition contenant 80 % de Portland et 20 % de ciment alumineux, et trois ciments sulfoalumineux différents dont les caractéristiques sont décrites dans le tableau 1. Un test de lixiviation inspiré de la norme X31-211 a été réalisé sur chacune des éprouvettes ainsi constituées. Le test de lixiviation se distingue de celui de la norme X31-211 en ce que le séjour dans l'eau de lixiviation a été de 1 fois 24 heures au lieu de 3 fois 16 heures entrecoupées d'une durée de mise au repos de 8 heures chacune.

Tableau 1 :

| composition des ciments sulfoalumineux | | | |
|---|---|---|---|
| | Ciment sulfoalumineux 1 | Ciment sulfoalumineux 2 | Ciment sulfoalumineux 3 |
| Composition élémentaire (fluorescence X) | CaO : 38 %<br>$Al_2O_3$ : 47,4 %<br>$SO_3$ : 7,5 %<br>$SiO_2$ : 3,6 %<br>$Fe_2O_3$ : 1,4 %<br>$TiO_2$ : 2,2 %<br>MgO : 0,3 %<br>$K_2O$ : 0,2 %<br>$Na_2O$ : 0,1 % | CaO : 44,9 %<br>$Al_2O_3$ : 28,2 %<br>$SO_3$ : 7,3 %<br>$SiO_2$ : 7,7 %<br>$Fe_2O_3$ : 7,4 %<br>$TiO_2$ : 2,3 %<br>MgO : 0,7 %<br>$K_2O$ : 0,2 %<br>$Na_2O$ : 0 % | CaO : 42,4 %<br>$Al_2O_3$ : 34,2 %<br>$SO_3$ : 8,5 %<br>$SiO_2$ : 7,6 %<br>$Fe_2O_3$ : 3,03 %<br>$TiO_2$ : 1,5 %<br>MgO : 2,1 %<br>$K_2O$ : 0,3 %<br>$Na_2O$ : 0,1 % |
| Composition minéralogique | $C_4A_3\bar{S}$ : 56 %<br>$C_4AF$ : 3 %<br>$C_2AS$ : 17 %<br>CA : 17% | $C_4A_3\bar{S}$ : 45 %<br>$C_2S$ : 20 %<br>$C_4AF$ : 20 %<br>$C\bar{S}$ = 3 % | $C_4A_3\bar{S}$ : 60 %<br>$C_2S$ : 18 %<br>$C_4AF$ : 10 %<br>$C\bar{S}$ : 1,6% |

Les résultats du test de lixiviation portant sur les fractions solubles sont les suivants (tableau 2) :

Tableau 2 :

| résultat des tests de lixiviation | | | | | | |
|---|---|---|---|---|---|---|
| Type de ciment | Portland | Alumineux | Portl. + alumineux | Ciment 1 | Ciment 2 | Ciment 3 |
| Fraction soluble | 10,2 % | 6,5 % | 8,4 % | 5,4 % | 4,1 % | 5,5 % |

Le tableau 2 montre clairement que la fraction soluble est abaissée d'au moins 1 point par rapport aux autres ciments lorsqu'un des ciments sulfoalumineux est utilisé comme liant d'inertage du déchet.

Des expérimentations complémentaires ont montré que le même phénomène était observé pour des teneurs de ciment introduites dans le mélange comprises entre 20 et 100 parties pour 100 parties du même déchet.

Exemple 2

Une partie du ciment sulfoalumineux introduit comme précédemment dans le mélange a été substituée par différents ajouts de manière à diminuer la quantité de ciment utilisée pour l'inertage. Ces ajouts (introduits séparément) étaient des cendres volantes, un laitier et trois zéolites différentes dont la composition est donnée dans le tableau 3 suivant :

Tableau 3 :

| constituants principaux des zéolites | | | |
|---|---|---|---|
| | Zéolite 1 | Zéolite 2 | Zéolite 3 |
| Perte au feu | 1,2 | 9,3 | 0 |
| $SiO_2$ | 48,2 | 66,8 | 49 |
| $Al_2O_3$ | 42,5 | 13,2 | 18 |
| $Fe_2O_3$ | 0,6 | 1,4 | 4 |
| $TiO_2$ | 1,6 | 0,2 | 1 |
| CaO | 0,2 | 3,6 | 7 |
| MgO | 0 | 1,1 | 1 |

Ces zéolites présentent une surface spécifique au moins de l'ordre de 1500 $cm^2/g$.

Pour 100 parties de refiom, 40 parties de liant d'inertage (ciment + ajout) ont été introduites avec 57,5 parties d'eau. Le liant hydraulique d'inertage est constitué d'une teneur variable en ajouts comprise entre 0 et 75 %, le complément à 100 % étant constitué de ciment sulfoalumineux 2. La fraction soluble des éprouvettes ainsi constituées a été mesurée suivant le même protocole que celui décrit à l'exemple 1 (tableau 4).

Tableau 4 :

| résultats des mesures de fraction soluble (en %) | | | | | |
|---|---|---|---|---|---|
| Teneur d'ajout dans le liant d'inertage | Cendres volantes | Laitier | Zéolite 1 | Zéolite 2 | Zéolite 3 |
| 30 % | 7 | 6,7 | 5,4 | 6 | 5,8 |
| 50 % | 8,8 | 8,5 | 6,4 | 7,8 | 7,5 |
| 67 % | 13,8 | 12,8 | 8,1 | 9,9 | 9,7 |
| 75 % | 16,2 | 15,4 | 9 | 11,9 | 11,2 |

La fraction soluble reste peu élevée lorsqu'une zéolite est utilisée en comparaison des valeurs mesurées aux mêmes teneurs de cendres volantes et de laitier dans le liant hydraulique.

Cette fraction soluble ne dépasse pas 10 % pour les trois zéolites, jusqu'à des teneurs allant jusqu'à 67 % dans le liant hydraulique.

On remarque également que la zéolite 1 qui possède un rapport $Al_2O_3/SiO_2$ plus élevé que les zéolites 2 et 3 présente une meilleure efficacité.

Exemple 3

Diverses quantités de liant hydraulique constitué de proportions variables de ciment sulfoalumineux 1 et de zéolite 3 ont été utilisées pour enrober le même refiom que celui des exemples 1 et 2, à savoir 23, 31 et 40 parties de liant pour 100 parties de refiom, en présence de respectivement 50,6 ; 53,8 et 57,5 parties d'eau.

Les mesures de fraction soluble ont été effectuées comme précédemment, et les résultats obtenus sont portés sur la figure 1 sous forme de graphiques présentant la fraction soluble (%) en fonction du pourcentage d'ajout dans le liant d'inertage. Sur ces graphiques, on remarque que pour rester en deçà de la limite de 10 % de fraction soluble, on peut utiliser jusqu'à environ 15, 53 et 67 % de filler constitué de zéolite 3, pour respectivement 23, 31 et 40 parties de liant.

La proportion de ciment sulfoalumineux 1 pour ces différentes limites est alors voisine de 15 parties pour 100 parties de refiom.

Tableau 5

| Parties refiom | Parties Liant | Composition du liant Parties ajout | Composition du liant Parties ciment | % ajout minimum pour rester en deçà de 10 % de fraction soluble |
|---|---|---|---|---|
| 100 | 23 | 4 | 19 | 15 |
| 100 | 31 | 16 | 15 | 53 |

Tableau 5 (suite)

| Parties refiom | Parties Liant | Composition du liant Parties ajout | Composition du liant Parties ciment | % ajout minimum pour rester en deçà de 10 % de fraction soluble |
|---|---|---|---|---|
| 100 | 40 | 27 | 13 | 67 |

**Revendications**

1. Procédé d'inertage de déchets par enrobage desdits déchets dans un liant hydraulique, à base de ciment, **caractérisé en ce que** le liant hydraulique d'inertage comprend du ciment sulfoalumineux composé d'au moins 30 % en poids de la phase $3CaO.3Al_2O_3.CaSO_4$ ($C_4A_3S$).

2. Procédé d'inertage de déchets selon la revendication 1, **caractérisé en ce que** le liant hydraulique est constitué essentiellement dudit ciment sulfoalumineux.

3. Procédé selon la revendication 2 **caractérisé en ce que** la proportion de ciment sulfoalumineux est comprise entre 15 et 150, de préférence entre 25 et 100 parties en poids pour 100 parties de déchet.

4. Procédé selon la revendication 3 **caractérisé en ce que** la proportion de ciment sulfoalumineux est comprise entre 25 et 100 en poids pour 100 parties de déchet.

5. Procédé selon la revendication 1, **caractérisé en ce que** le liant hydraulique comprend du ciment sulfoalumineux et un filler à base d'une ou plusieurs zéolites.

6. Procédé selon la revendication 5, **caractérisé en ce que** la zéolite est présente dans le liant hydraulique en des proportions telles qu'il contienne au moins 13 parties environ dudit ciment sulfoalumineux, pour 100 parties de déchet.

7. Prémix pour la mise en oeuvre du procédé selon l'une des revendications précédentes, contenant au moins une zéolite et au moins 15 % de ciment sulfoalumineux, composé d'au moins 30 % de phase $3CaO.3Al_2O_3.CaSO_4$ ($C_4A_3S$).

8. Utilisation du prémix selon la revendication 7 pour l'inertage de résidus d'incinération d'ordures ménagères.

**Claims**

1. A process for rendering waste inert by encasing said waste in a cement-based hydraulic binder, **characterised in that** the hydraulic binder for rendering waste inert comprises thioaluminous cement containing at least 30% by weight of the phase $3CaO.3Al_2O_3.CaSO_4$ ($C_4A_3S$).

2. A process for rendering waste inert according to claim 1, **characterised in that** the hydraulic binder mainly comprises the said thioaluminous cement.

3. A process according to claim 2, **characterised in that** the proportion of thioaluminous cement is between 15 and 150, preferably between 25 and 100 parts by weight per 100 parts of waste.

4. A process according to claim 3, **characterised in that** the proportion of thioaluminous cement is between 25 and 100 parts by weight per 100 parts of waste.

5. A process according to claim 1, **characterised in that** the hydraulic binder comprises thioaluminous cement and a filler based on one or more zeolites.

6. A process according to claim 5, **characterised in that** the zeolite is present in the hydraulic binder in proportions such that it contains at least approximately 13 parts of the said thioaluminous cement per 100 parts of waste.

7. A premix for carrying out the process according to any one of the preceding claims, comprising at least one zeolite and at least 15% thioaluminous cement containing at least 30% of the phase $3CaO.3Al_2O_3.CaSO_4$ ($C_4A_3S$).

8. Use of the premix according to claim 7 for rendering inert the residues resulting from the incineration of household waste.

**Patentansprüche**

1. Verfahren zum Inertisieren von Abfällen durch Einkapseln der Abfälle in einem hydraulischen Binder auf Zementbasis, **dadurch gekennzeichnet, daß** der hydraulische Binder zum Inertisieren Schwefelaluminium-Zement umfaßt, der zu mindestens 30 Gew.-% aus der Phase $3CaO.3Al_2O_3.CaSO_4$ ($C_4A_3S$) zusammengesetzt ist.

2. Verfahren zum Inertisieren von Abfällen nach Anspruch 1, **dadurch gekennzeichnet, daß** der hydraulische Binder im wesentlichen aus dem Schwefelaluminium-Zement zusammengesetzt ist.

3. Verfahren nach Anspruch 2, **dadurch gekennzeichnet, daß** der Anteil an Schwefelaluminium-Zement im Bereich von 15 bis 150, vorzugsweise von 25 bis 100 Gew.-Teilen pro 100 Teile Abfall liegt.

4. Verfahren nach Anspruch 3, **dadurch gekennzeichnet, daß** der Anteil an Schwefelaluminium-Zement im Bereich von 25 bis 100 Gew.-Teilen pro 100 Teile Abfall liegt.

5. Verfahren nach Anspruch 1, **dadurch gekennzeichnet, daß** der hydraulische Binder Schwefelaluminium-Zement und einen Füllstoff auf der Basis eines oder mehrerer Zeolithe umfaßt.

6. Verfahren nach Anspruch 5, **dadurch gekennzeichnet, daß** der Zeolith in solchen Mengen in dem hydraulischen Binder vorhanden ist, daß dieser mindestens etwa 13 Teile des Schwefelaluminium-Zementes pro 100 Teile Abfall enthält.

7. Vorgemisch zur Durchführung des Verfahrens nach einem der vorhergehenden Ansprüche, das mindestens einen Zeolith und mindestens 15% Schwefelaluminium-Zement umfaßt, der zu mindestens 30% aus der Phase $3CaO.3Al_2O_3.CaSO_4$ ($C_4A_3S$) zusammengesetzt ist.

8. Verwendung des Vorgemisches nach Anspruch 7 zum Inertisieren von Rückständen aus der Hausmüllverbrennung.

Fig. 1

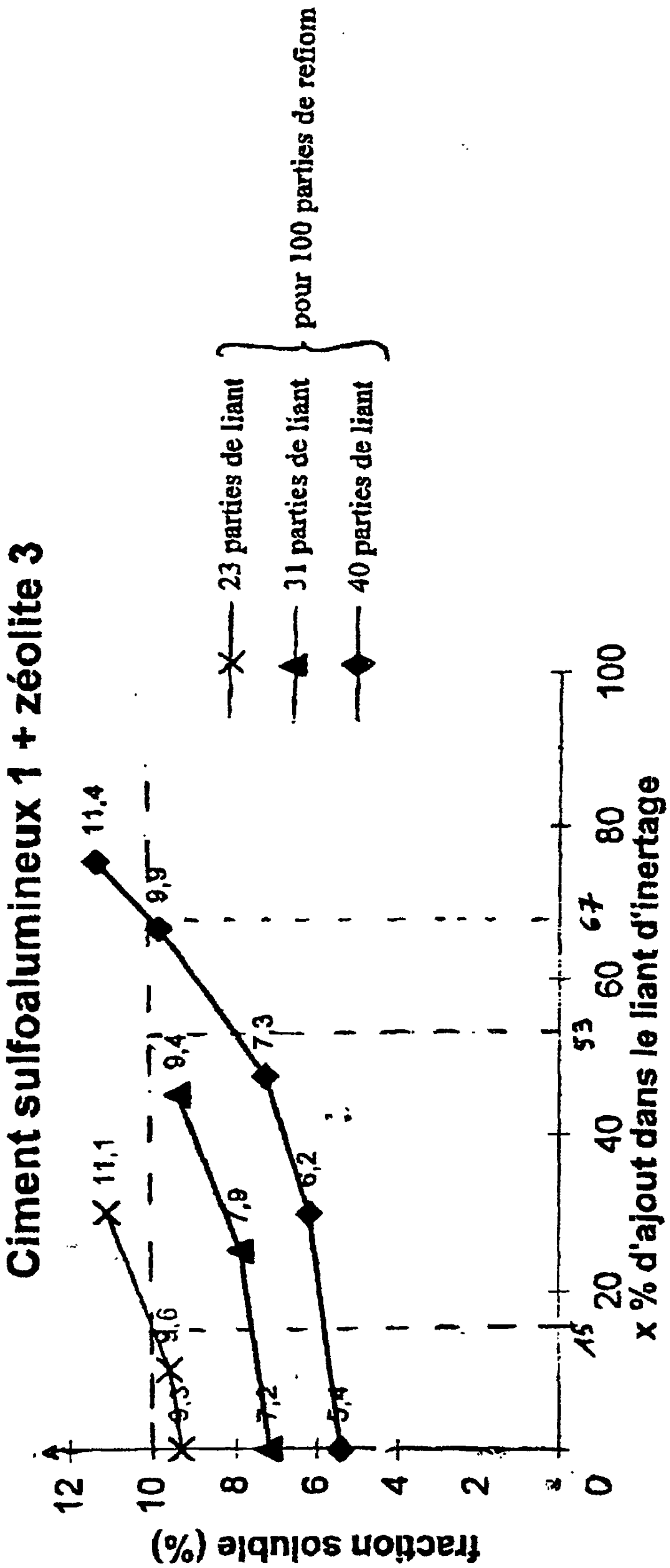
Ciment sulfoalumineux 1 + zéolite 3
fraction soluble (%)
x % d'ajout dans le liant d'inertage
23 parties de liant
31 parties de liant
40 parties de liant
pour 100 parties de refiom
0
2
4
6
8
10
12
20
40
60
80
100
15
53
67
9,3
9,6
11,1
7,2
7,9
9,4
5,4
6,2
7,3
9,9
11,4